# EUROPEAN PATENT SPECIFICATION

(11) **EP 2 905 154 B1**
(45) Date of publication and mention of the grant of the patent: **12.04.2017**
(21) Application number: 15153400.5
(22) Date of filing: 02.02.2015
(51) Int. Cl.: B60C 25/13, B60C 25/138, B60C 25/05

(54) **Tyre-changing machine**
Reifenwechselmaschine
Machine de changement de pneu

(30) Priority: 07.02.2014 IT MO20140024
(43) Date of publication of application: 12.08.2015
(73) Proprietor: SICAM S.r.l., 42015 Correggio (RE) (IT); ROBERT BOSCH GMBH, 70442 Stuttgart (DE)
(72) Inventor: Immler, Michael, 87509 Immenstadt (DE); Egle, Karl, 82216 Maisach (DE); Macchia, Adriano, 80798 München (DE); Vescovini, Marco, 41032 Cavezzo (MO) (IT)
(74) Representative: Luppi, Emanuele

(56) References cited:
- EP-A1- 0 015 102
- WO-A1-2006/033649
- DE-U1- 9 112 783
- FR-A- 1 573 575
- US-A- 2 925 837

## Description

The present invention relates to a tyre-changing machine for fitting and removing wheels of vehicles.

The wheels for vehicles consist of a metal rim having, at its axial extremities, annular containment flanges between which a groove is defined for inserting a tyre by interlocking.

In the mounting configuration, the lateral portions of the tyre, so-called "beads", abut against the containment flanges.

An air chamber can be inserted in the tyre or, in case of "tubeless" tyres, pressurized air can be introduced directly.

Tyre-changing machines are currently employed to perform the fitting and removal operations of tyres onto and from the relative rims.

They allow to remove the tyre from its rim, for example to perform maintenance or replacement jobs on the air chamber, the rim and/or the tyre itself, and then to mount it again, or place a new one, on the rim.

The tyre-changing machines generally have a spindle, which allows to put the wheel in rotation around an axis of rotation, and a hook-shaped demounting tool, which is introduced between tyre and rim to pull out one of the beads.

In tyre-changing machines with spindles having a vertical rotation axis, for example, the wheel is fitted on the machine so as to lie substantially on a horizontal plane of arrangement, with its beads/flanks arranged one above and one below.

To enable the correct introduction of the demounting tool between tyre and rim, the traditional tyre-changing machines have a bead breaking device that allows, as a preliminary operation to the actual removal job, to move the beads away from the rim.

After being inflated with air and mounted on vehicles, the traditional tyres tend to adhere strongly to the containment flanges of the relative rim and, even when deflated, they can be detached only by means of pneumatic and/or hydraulic arms.

In this regard it is underlined that, for the so-called "run-flat" recent tyres, having particularly hard and thick beads and flanks, the force to be applied on the flank of the tyre to detach the latter is greater than for traditional tyres.

As a consequence, an operator has more chances to damage a tyre during its removal so that tyre manufacturers advise against mounting a run-flat tyre again because of the damage occurred during the fitting and removal procedure.

Currently there are two types of bead breaking devices.

The first type consists of a pneumatic or hydraulic arm which is mounted on one side of the tyre-changing machine and which is intended to press a tool against the bead.

Before mounting it on the spindle, the tyre is positioned between the arm and the frame of the machine in a vertical position, i.e. with the axis of rotation horizontally, a flank resting against the frame of the machine and the opposite flank facing the tool to be crushed.

In particular, the tool is positioned against one of the beads, more precisely on a portion of the same, and pressed against the tyre to detach the bead, at least in correspondence to the above mentioned portion.

The tyre is then rotated manually and the procedure is repeated until the whole first bead is completely separated from the rim, then the same operation is performed also for the opposite bead, after having rotated the tyre horizontally by 180°.

There are several drawbacks for this first type of bead breaking device.

In particular, it is underlined that the tool applies on the bead a very intense force instantaneously and this may lead to the perforation of the tyre and/or the damage to the rim.

To this it is added that, inconveniently, the bead breaking procedure must be repeated twice, one for each bead.

The second type of bead breaking device is the one mounted on the tyre-changing machine shown in the patent document EP 2 484 541 and which has one or more rollers, attached to movable arms.

While the wheel is made to rotate, the rollers are pushed against the tyre with an increasing force until the bead is detached from the rim.

If the machine has only one arm (normally at the top), the tyre is turned over and the procedure is repeated to detach the bead on the other side.

Also this second type of bead breaking device has several drawbacks.

First of all, it is underlined that, due to the shape of the rollers, the forces applied on the bead to detach it from its rim are only concentrated on small localized areas of the tyre.

These concentrated and localized forces, in combination with the rotation of the tyre and the rim, increase the chances of damaging the tyre.

The application of a force on the tyre flank and the simultaneous rotation of the wheel, in fact, may lead to the formation of cuts inside the tyre which the operator, during the job, may not be aware of and which can cause the ultimate breakage of the tyre at a later time, e.g. when the wheel has already been remounted on the vehicle and the possible damage can also be more serious. This problem is particularly felt for run-flat tyres.

Furthermore, in the traditional bead breaking devices there isn't any control of the force applied by the arms, which are controlled individually and do not allow both beads to be detached simultaneously.

The bead breaking procedure is therefore very long.

Special types of tyre-changing machines are disclosed in the patent documents WO 2006/033649, FR 1 573 575, US 2,925,837 and EP 0 015 102.

The main aim of the present invention is to provide a tyre-changing machine that reduces/eliminates the chance of damaging the tyre and/or the rim during the bead breaking procedure.

Another object of the present invention is to provide a tyre-changing machine that reduces/eliminates the chance of damaging the tyre and/or the rim during the bead breaking procedure for run-flat tyres, thus allowing them to be securely fitted more than once.

A further object of the present invention is to provide a tyre-changing machine which allows to overcome the mentioned drawbacks of the prior art in the ambit of a simple, rational, easy and effective to use as well as affordable solution.

The above mentioned objects are achieved by a machine having the characteristics mentioned in claim 1.

The above mentioned objects are also achieved by a bead breaking method having the characteristics mentioned in claim 6.

Other characteristics and advantages of the present invention will become better evident from the description of a preferred, but not exclusive embodiment of a tyre-changing machine, illustrated by way of an indicative, but not limitative example in the accompanying drawings in which:
Figure 1 is an axonometric view of the machine according to the invention;
Figure 2 is a view from above of the machine according to the invention;
Figures 3 to 5 show, in a sequence of axonometric views, the bead breaking stages of a tyre performed by means of the machine according to the invention.

With particular reference to such illustrations, globally indicated with reference number 10 is a tyre-changing machine for a wheel R.

The wheel R comprises in a known manner a rim C on which is mounted a tyre PN having a portion of tread B and two opposite flanks, of which a first flank F1 and a second flank F2.

The machine 10 comprises a base or bed 12 for resting on the ground, from which extends a spindle 14 on which the wheel R is mountable.

The spindle 14 is configured to tighten the rim C on the bed 12, e.g. by means of a locking clamp or hub 16 which can be interlocked or screwed into the spindle 14.

The rim C is tightened so as to place the wheel R with the first flank F1 arranged in a distal position with respect to the bed 12 and the second flank F2 arranged in a proximal position with respect to the bed 12.

In other words, when the wheel R is fitted on the spindle 14, the first flank F1 is located farther from the bed 12 with respect to the second flank F2, which is on the contrary facing it.

The spindle 14 is also able to put the wheel R in rotation around an axis of rotation A.

The spindle 14, in fact, is motorized in rotation around the axis of rotation A and, when the wheel R is loaded onto the machine 1, it is also dragged in rotation.

In the particular embodiment shown in the illustrations, the spindle 14 is arranged vertically above the bed 12.

This means that, when the wheel R is fixed to the spindle 14, its central axis of symmetry is coaxial to the axis of rotation A and is oriented vertically, with the first flank F1 turned upwards and the second flank F2 turned downwards.

Alternative embodiments cannot however be ruled out, wherein the spindle 14 and the axis of rotation A are oriented in a different way, e.g., horizontal or oblique.

According to the invention, the machine 10 comprises two support arms 30, 40 having at their free extremities a bead breaking tool 32, 42, respectively.

The bead breaking tools 32, 42 are mounted in the proximity of the spindle 14 and are movable one towards the other along a bead-breaking direction D1 substantially parallel to the axis of rotation A of the spindle 14.

The bead breaking tools 32, 42 also have respective non-rolling contact surfaces 34, 44 able to contact and push in use the opposite flanks F1, F2 when the wheel R is mounted on the spindle 14.

In the particular embodiment shown in the illustrations, the support arms 30, 40 are movable manually or by means of known (hydraulic, pneumatic, or electric) operations to shift the bead breaking tools 32, 42 along the bead-breaking direction D1 with respect to the spindle 14.

Preferably, with the advantage of being able to adjust the abutment point of the bead breaking tools 32, 42 on wheels R of any diameter, the support arms 30, 40 are also adjustable in the radial distance from the center of the wheel R, i.e. along an adjustment direction D2 substantially orthogonal to the axis of rotation A.

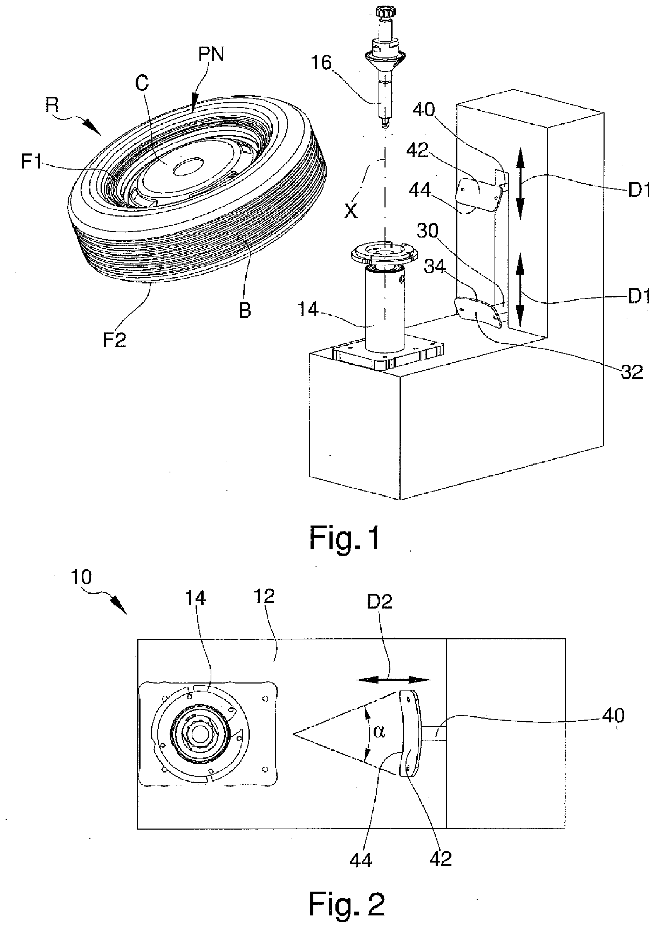

As can be clearly seen in Figure 2, the bead breaking tools 32, 42 preferably consist of a piece folded in the shape of an arc, oriented in such a way as to contact the respective flank F1, F2 with a curved edge which defines the non-rolling contact surface 34, 44.

In this regard, it is underlined that in the present discussion the term "noun-rolling contact surface" means an area of the bead breaking tools 32, 42 that comes in contact with the first flank F1 and the second flank F2 without being able to roll on the tyre PN.

In this regard, it is noticed that the bead breaking tools 32, 42 are fixed to the support arms 30, 40 and do not have any rotary motion.

The non-rolling contact surfaces 34, 44, as said, are substantially curved and have the concavity thereof facing the axis of rotation A.

In other words the non-rolling contact surfaces 34, 44 are shaped so as to reproduce at least in part the rounded shape of the wheel R, particularly of the first flank F1 and of the second flank F2 on which the bead breaking tools 32, 42 are pressed.

The angular opening of the non-rolling contact surfaces 34, 44 is quite large and allows the bead breaking tools 32, 42 to come in contact with a very large angular sector of the tyre PN; this characteristic is essential in order to be able to remove the first flank F1 and the second flank F2.

In particular, the angular opening α of the non-rolling contact surfaces 34, 44 is within the range 30°-60°, more precisely between 40°-50°, and preferably equal to 45°.

Furthermore, this arc may have a length within the range 10-30 cm, more precisely between 15-25 cm, and preferably equal to 20 cm.

The bead breaking tools 32, 42 therefore have a large contact surface, larger than that present in the bead breaking rollers of the prior art.

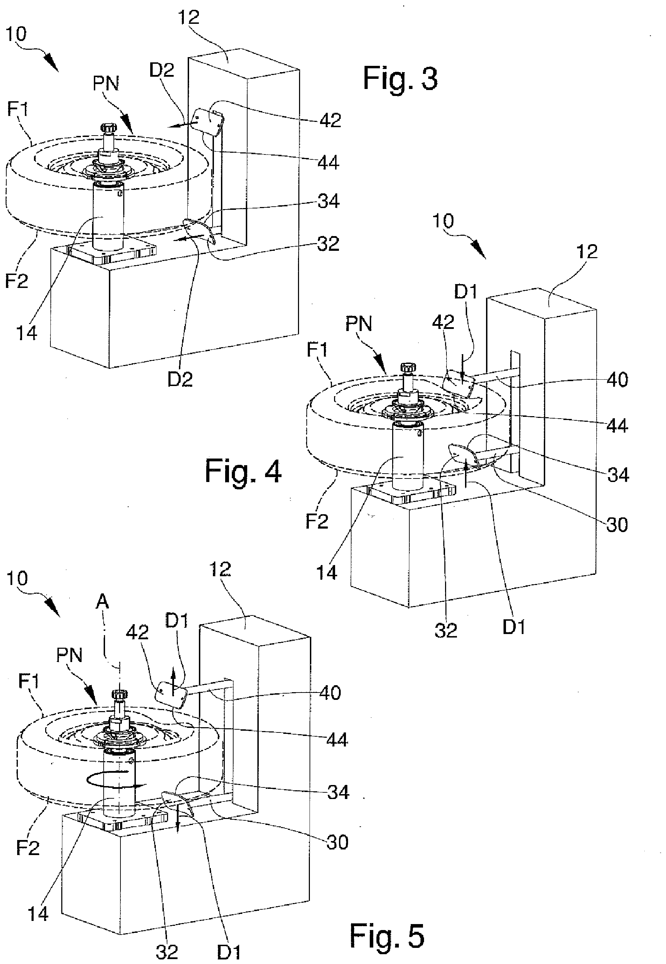

With reference to Figures 3 to 5 the operation of the machine 10 is now described.

The wheel R with the tyre PN applied above is mounted on the spindle 14, e.g. manually by an operator or by means of special lifting systems.

The bead breaking tools 32, 42 are moved horizontally and orthogonally to the axis of rotation A along the adjustment direction D2, to find their correct relative distance, depending on the diameter of the rim C and sufficient to embrace the tyre PN on the two opposite flanks F 1, F2.

Preferably, the two bead breaking tools 32, 42 move together, i.e. the support arms 30, 40 have synchronized movements.

The displacement of the support arms 30, 40 can be performed manually or automatically, e.g. by measuring their distance from the tyre PN or from the spindle 14 by means of an optical or video system (such as a laser system) or a proximity detection system.

At the end of their horizontal sliding, the bead breaking tools 32, 42 are positioned symmetrically on both sides of the tyre PN, in correspondence to the beads of the flanks F1, F2.

The bead breaking tools 32, 42 then move vertically, approaching parallel to the axis of rotation A along the bead-breaking direction D1, to find their correct position with respect to the rim C.

The bead breaking tools 32, 42 are moved simultaneously and incrementally towards one another until they touch the beads of the flanks F1, F2 and detach them.

This movement can be done manually or automatically, e.g., based on a pre-set distance or displacement.

The bead breaking tools 32, 42 are then separated vertically with a movement opposite the previous one and if the beads of the flanks F1, F2 are not completely detached the procedure is repeated at another location on the tyre PN by rotating the latter with the spindle 14 (Figure 5) to make - if needed - a complete turn.

To accurately repeat the application of the bead breaking pressure, the optimal position and/or movement of the bead breaking tools 32, 42 can be stored in an electronic memory.

Optionally, to maximize the bead breaking procedure, a lubricant fluid can be applied (automatically or manually) between the beads of the flanks F1, F2 and the edges of the rim C.

After the complete detachment of the beads of the flanks F1, F2, the bead breaking tools 32, 42 move away from each other and from the spindle 14 in order to allow the operator to work on the tyre PN and perform the actual demounting operation from the rim C.

This part of the procedure can be done manually or automatically by means of traditional demounting tools with which the machine 10 is provided and which are not shown in detail in the illustrations.

It follows that the bead breaking method according to the present invention comprises the following steps:
- providing the tyre-changing machine 10;
- mounting on the spindle 14 the wheel R by tightening the rim C on the spindle 14 which is able to put the wheel R in rotation around the axis of rotation A;
- pushing the opposite flanks F1, F2 by means of the bead breaking tools 32, 42 along the bead-breaking direction D1; i.e. parallel to the axis of rotation A, so as to release the tyre PN from the rim C. Conveniently this stage of the procedure comprises the sub-steps of:
   - pressing the bead breaking tools 32, 42 on a surface of the opposite flanks F1, F2 corresponding to a circular sector of the circumference of the wheel R to release the tyre PN in correspondence to the circular sector;
   - moving the bead breaking tools 32, 42 away from the opposite flanks F1, F2;
   - rotating the spindle 14 and the wheel R around the axis of rotation A when the bead breaking tools 32, 42 are moved away, so as to avoid the sliding and deformation of the tyre PN during rotation. This sub-step allows to shift the circular sector with respect to the bead breaking tools 32, 42 moved away;
   - repeating the sub-steps of pressing, moving away and rotating on different circular sectors, to release the whole tyre PN. Conveniently, in this repetition the different circular sectors are adjacent and together they cover the entire circumference of the opposite flanks F1, F2. In other words, the circumference of the wheel R can be divided in a series of adjacent circular sectors that the bead breaking tools 32, 42 crush in sequence, thus ensuring that the flanks F1, F2 are completely released.

The machine 10 and the relevant bead breaking method have therefore the advantage of reducing the risk of damaging the tyre PN during bead breaking because:
- the tyre PN does not rotate while a force or pressure is applied to the beads/flanks F1, F2 to release them;
- the application of the force and the distance of the bead breaking tools 32, 42 are controlled and the tyre PN is not hit abruptly. This control only allows to apply the force needed to break the beads;
- the force is applied symmetrically on both sides of the tyre PN;
- the force on the beads is applied on a larger surface than with the rollers of the tyre-changing machines of known type.

Furthermore, the bead breaking procedure is faster and more practical, because both beads are detached simultaneously and, after the bead breaking tools 32, 42 have carried out their function on a circular sector of the flanks F1, F2, the wheel R is rotated directly by the spindle 14.

Since for the positioning of the bead breaking tools 32, 42, the relative motion between the tyre PN and the bead breaking tools 32, 42 is very important, the latter could be movable only to approach one another, with the spindle 14 which instead is movable to approach the tools 32, 42.

The inclination of the axis of rotation A with respect to the bed 12 can be any, only the displacements of the tools 32, 42 with respect to it being important.

## Claims

1. Tyre-changing machine (10) for fitting and removing vehicle wheels, comprising:
- at least a bed (12) for resting on the ground;
- at least a spindle (14) which extends from said bed (12) and on which is mountable at least a wheel (R) having a rim (C) and a tyre (PN) with two opposite flanks (F1, F2), said spindle (14) being configured to tighten said rim (C) on it and able to put in rotation said wheel (R) around an axis of rotation (A); and
- two bead breaking tools (32, 42) which are movable one towards the other in the proximity of said spindle (14) along a bead-breaking direction (D1) substantially parallel to said axis of rotation (A) of the spindle (14), said bead breaking tools (32, 42) having respective non-rolling contact surfaces (34, 44) able to contact and push in use said opposite flanks (F1, F2) with said wheel (R) mounted on said spindle (14);
**characterized by** the fact that said non-rolling contact surfaces (34, 44) are substantially curved with the concavity thereof facing said axis of rotation (A), and the position and/or movement of said bead breaking tools (32, 42) can be stored in an electronic memory for:
- pressing said bead breaking tools (32, 42) on a surface of said opposite flanks (F1, F2) corresponding to a circular sector of the circumference of said wheel (R) to remove said tyre (PN) in correspondence to said circular sector;
- moving said bead breaking tools (32, 42) away from said opposite flanks (F1, F2);
- rotating said spindle (14) and said wheel (R) around said axis of rotation (A) to shift said circular sector with respect to said bead breaking tools (32, 42) moved away;
- repeating said pressing, said moving away and said rotating on different circular sectors to remove the complete tyre (PN)t, wherein in said repeating the different circular sectors are adjacent and together cover the entire circumference of said opposite flanks (F1, F2).

2. Machine according to claim 1, **characterized by** the fact that said bead breaking tools (32, 42) and said spindle (14) are reciprocally movable along an adjustment direction (D2) substantially orthogonal to said axis of rotation (A) to adjust in use the radial distance of said bead breaking tools (32, 42) from said tyre (PN).

3. Machine according to claim 1 or 2, **characterized by** the fact that the bead breaking tools (32, 42) are mounted on a respective support arm (30, 40) that is movable with respect to said bed (12) along said bead-breaking direction (D1).

4. Machine according to one or more of the preceding claims, **characterized by** the fact that said bead breaking tools (32, 42) are configured to move along said bead-breaking direction (D1) and/or along said adjustment direction (D2) in a synchronized manner.

5. Machine according to one or more of the preceding claims, **characterized by** the fact that it comprises actuators with electronic control of the position for moving said bead breaking tools (32, 42).

6. A method for removing a tyre from the rim of a wheel, **characterized by** the fact that it comprises the steps of:
- providing at least a tyre-changing machine (10) having at least a bed (12) for resting on the ground, at least a spindle (14) which extends from said bed (12) and two bead breaking tools (32, 42) with respective non-rolling contact surfaces (34, 44);
- mounting on said spindle (14) at least a wheel (R) having a rim (C) and a tyre (PN) with two opposite flanks (F1, F2), said mounting comprising tightening said rim (C) on said spindle (14) that is able to put in rotation said wheel (R) around an axis of rotation (A);
- pushing said opposite flanks (F1, F2) by means of said bead breaking tools (32, 42) along a bead-breaking direction (D1) substantially parallel to said axis of rotation (A), to release said tyre (PN) from said rim (C), wherein said non-rolling contact surfaces (34, 44) are substantially curved with the concavity thereof facing said axis of rotation (A) and wherein said pushing comprises the steps of:
- pressing said bead breaking tools (32, 42) on a surface of said opposite flanks (F1, F2) corresponding to a circular sector of the circumference of said wheel (R) to remove said tyre (PN) in correspondence to said circular sector;
- moving said bead breaking tools (32, 42) away from said opposite flanks (F1, F2);
- rotating said spindle (14) and said wheel (R) around said axis of rotation (A) to shift said circular sector with respect to said bead breaking tools (32, 42) moved away;
- repeating said pressing, said moving away and said rotating on different circular sectors to remove the complete tyre (PN)t, wherein in said repeating the different circular sectors are adjacent and together cover the entire circumference of said opposite flanks (F1, F2) and the position and/or movement of said bead breaking tools (32, 42) can be stored in an electronic memory.

## Patentansprüche

1. Reifenwechselmaschine (10) zum Anbringen und Abnehmen von Fahrzeugrädern, umfassend:
mindestens ein Bett (12) zum Aufliegen auf dem Boden;
mindestens eine Spindel (14), die sich von dem Bett (12) erstreckt und auf der mindestens ein Rad (R) montierbar ist, das eine Felge (C) und einen Reifen (PN) mit zwei gegenüberliegenden Flanken (F1, F2) aufweist, wobei die Spindel (14) zum Festziehen der Felge (C) darauf konfiguriert ist und das Rad (R) um eine Drehachse (A) drehen kann; und
zwei Wulstbrechwerkzeuge (32, 42), die zueinander in Nähe der Spindel (14) entlang einer Wulstbrechrichtung (D1) beweglich sind, die im Wesentlichen parallel zur Drehachse (A) der Spindel (14) verläuft, wobei die Wulstbrechwerkzeuge (32, 42) zugehörige nicht rollende Kontaktoberflächen (34, 44) aufweisen, die bei Verwendung die gegenüberliegenden Flanken (F1, F2) mit dem Rad (R), das auf der Spindel (14) montiert ist, in Kontakt bringen;
**dadurch gekennzeichnet, dass** die nicht rollenden Kontaktoberflächen (34, 44) im Wesentlichen mit der Konkavität davon zur Drehachse (A) weisend gekrümmt sind und dass die Position und/oder Bewegung des Wulstbrechwerkzeugs (32, 42) in einem elektronischen Speicher gespeichert werden kann, um Folgendes durchzuführen:
Pressen des Wulstbrechwerkzeuge (32, 42) auf eine Oberfläche der gegenüberliegenden Flanken (F1, F2), die einem kreisförmigen Abschnitt des Umfangs des Rades (R) zum Entfernen des Reifens (PN) entsprechend des kreisförmigen Abschnitts entsprechen;
Bewegen der Wulstbrechwerkzeuge (32, 42) weg von den gegenüberliegenden Flanken (F1, F2);
Drehen der Spindel (14) und des Rades (R) um die Drehachse (A) zum Schalten des kreisförmigen Abschnitts in Bezug auf die Wulstbrechwerkzeuge (32, 42), die wegbewegt werden;
Wiederholen des Pressens, des Wegbewegens und des Drehens an unterschiedlichen ringförmigen Abschnitten zum Entfernen des vollständigen Reifens (PN), wobei beim Wiederholen die unterschiedlichen ringförmigen Abschnitte benachbart sind und zusammen den gesamten Umfang der gegenüberliegenden Flanken (F1, F2) abdecken.

2. Maschine nach Anspruch 1, **dadurch gekennzeichnet, dass** die Wulstbrechwerkzeuge (32, 42) und die Spindel (14) gegenläufig entlang einer Einstellrichtung (D2) beweglich sind, die im Wesentlichen orthogonal zur Drehachse (A) zum Einstellen des radialen Abstands der Wulstbrechwerkzeuge (32, 42) von dem Reifen (PN) während der Verwendung verlaufen.

3. Maschine nach Anspruch 1 oder 2, **dadurch gekennzeichnet, dass** die Wulstbrechwerkzeuge (32, 42) an einem zugehörigen Tragarm (30, 40) montiert sind, der in Bezug auf das Bett (12) entlang der Wulstbrechrichtung (D1) beweglich ist.

4. Maschine nach einem oder mehreren der vorhergehenden Ansprüche, **dadurch gekennzeichnet, dass** die Wulstbrechwerkzeuge (32, 42) konfiguriert sind, um sich synchron entlang der Wulstbrechrichtung (D1) und/oder entlang der Einstellrichtung (D2) zu bewegen.

5. Maschine nach einem oder mehreren der vorhergehenden Ansprüche, **dadurch gekennzeichnet, dass** sie Stellglieder mit elektronischer Positionssteuerung zum Bewegen der Wulstbrechwerkzeuge (32, 42) umfasst.

6. Verfahren zum Entfernen eines Reifens von einer Radfelge, **dadurch gekennzeichnet, dass** es die folgenden Schritte umfasst:
Bereitstellen mindestens einer Reifenwechselmaschine (10), die mindestens ein Bett (12) zum Aufliegen auf dem Boden, mindestens eine Spindel (14), die sich von dem Bett (12) erstreckt, und zwei Wulstbrechwerkzeuge (32, 42) mit zugehörigen nicht rollenden Kontaktoberflächen (34, 44) aufweist;
Montieren mindestens eines Rades (R) auf der Spindel (14), das eine Felge (C) und einen Reifen (PN) mit zwei gegenüberliegenden Flanken (F1, F2) aufweist, wobei das Montieren das Festziehen der Felge (C) an der Spindel (14) umfasst, die das Rad (R) in Drehung um eine Drehachse (A) bringen kann;
Drücken der gegenüberliegenden Flanken (F1, F2) mittels der Wulstbrechwerkzeuge (32, 42) entlang einer Wulstbrechrichtung (D1), die im Wesentlichen parallel zur Drehachse (A) verläuft, um den Reifen (PN) von der Felge (C) freizugeben, wobei die nicht rollenden Kontaktoberflächen (34, 44) im Wesentlichen gekrümmt sind, wobei die Konkavität davon zur Drehachse (A) weist und wobei das Drücken die folgenden Schritte umfasst:
Pressen der Wulstbrechwerkzeuge (32, 42) auf eine Oberfläche der gegenüberliegenden Flanken (F1, F2), die einem kreisförmigen Abschnitt des Umfangs des Rades (R) zum Entfernen des Reifens (PN) entsprechend des kreisförmigen Abschnitts entsprechen;
Bewegen der Wulstbrechwerkzeuge (32, 42) weg von den gegenüberliegenden Flanken (F1, F2);
Drehen der Spindel (14) und des Rades (R) um die Drehachse (A) zum Schalten des kreisförmigen Abschnitts in Bezug auf die Wulstbrechwerkzeuge (32, 42), die wegbewegt werden;
Wiederholen des Pressens, des Wegbewegens und des Drehens an unterschiedlichen ringförmigen Abschnitten zum Entfernen des vollständigen Reifens (PN), wobei beim Wiederholen die unterschiedlichen ringförmigen Abschnitte benachbart sind und zusammen den gesamten Umfang der gegenüberliegenden Flanken (F1, F2) abdecken, und wobei die Position und/oder Bewegung der Wulstbrechwerkzeuge (32, 42) in einem elektronischen Speicher gespeichert werden kann.

## Revendications

1. Machine de changement de pneu (10) pour placer et enlever des roues de véhicule, comprenant:
- au moins un socle (2) destiné à reposer sur le sol;
- au moins une broche (14) qui s'étend à partir dudit socle (12) et sur laquelle peut être montée au moins une roue (R) comportant une jante (C) et un pneu (PN) présentant deux flancs opposés (F1, F2), ladite broche (14) étant configurée de manière à serrer ladite jante (C) sur celle-ci et étant capable de mettre ladite roue (R) en rotation autour d'un axe de rotation (A); et
- deux outils de décollement de talon (32, 42) qui sont mobiles l'un vers l'autre dans le voisinage de ladite broche (14) le long d'une direction de décollement de talon (D1) sensiblement parallèle audit axe de rotation (A) de la broche (14), lesdits outils de décollement de talon (32, 42) présentant des surfaces de contact non rotatives respectives (34, 44) capables d'entrer en contact et de pousser lors de l'utilisation lesdits flancs opposés (F1, F2) avec ladite roue (R) montée sur ladite broche (14),
**caractérisée par le fait que** lesdites surfaces de contact non rotatives respectives (34, 44) sont sensiblement courbes avec la concavité de celles-ci orientée vers ledit axe de rotation (A), et la position et/ou le déplacement desdits outils de décollement de talon (32, 42) peu(ven)t être stocké(s) dans une mémoire électronique afin de:
- presser lesdits outils de décollement de talon (32, 42) sur une surface desdits flancs opposés (F1, F2) qui correspond à un secteur circulaire de la circonférence de ladite roue (R) afin d'enlever ledit pneu (PN) en correspondance avec ledit secteur circulaire;
- déplacer lesdits outils de décollement de talon (32, 42) à l'écart desdits flancs opposés (F1, F2);
- mettre ladite broche (14) et ladite roue (R) en rotation autour dudit axe de rotation (A) afin de déplacer ledit secteur circulaire par rapport auxdits outils de décollement de talon (32, 42) écartés; et
- répéter lesdites opérations de pressage, écartement et mise en rotation sur différents secteurs circulaires afin d'enlever le pneu complet (PN)t, dans laquelle, lors de ladite répétition, les différents secteurs circulaires sont adjacents et couvrent ensemble la totalité de la circonférence desdits flancs opposés (F1, F2).

2. Machine selon la revendication 1, **caractérisée par le fait que** lesdits outils de décollement de talon (32, 42) et ladite broche (14) sont mobiles de façon réciproque le long d'une direction de réglage (D2) qui est sensiblement orthogonale audit axe de rotation (A) afin de régler lors de l'utilisation la distance radiale entre lesdits outils de décollement de talon (32, 42) et ledit pneu (PN).

3. Machine selon la revendication 1 ou 2, **caractérisée par le fait que** les outils de décollement de talon (32, 42) sont montés sur un bras de support respectif (30, 40) qui est mobile par rapport audit socle (12) le long de ladite direction de décollement de talon (D1).

4. Machine selon une ou plusieurs des revendications précédentes, **caractérisée par le fait que** lesdits outils de décollement de talon (32, 42) sont configurés de manière à se déplacer le long de ladite direction de décollement de talon (D1) et/ou le long de ladite direction de réglage (D2) d'une manière synchronisée.

5. Machine selon une ou plusieurs des revendications précédentes, **caractérisée par le fait qu'**elle comprend des actionneurs avec une commande électronique de la position pour déplacer lesdits outils de décollement de talon (32, 42).

6. Procédé pour enlever un pneu de la jante d'une roue, **caractérisé par le fait qu'**il comprend les étapes suivantes:
- prévoir au moins une machine de changement de pneu (10) comprenant au moins un socle (12) destiné à reposer sur le sol, au moins une broche (14) qui s'étend à partir dudit socle (12) et deux outils de décollement de talon (32, 42) présentant des surfaces de contact non rotatives respectives (34, 44);
- monter sur ladite broche (14) au moins une roue (R) comportant une jante (C) et un pneu (PN) présentant deux flancs opposés (F1, F2), ledit montage comprenant le serrage de ladite jante (C) sur ladite broche (14) qui est capable de mettre ladite roue (R) en rotation autour d'un axe de rotation (A); et
- pousser lesdits flancs opposés (F1, F2) à l'aide desdits outils de décollement de talon (32, 42) le long d'une direction de décollement de talon (D1) qui est sensiblement parallèle audit axe de rotation (A), afin de détacher ledit pneu (PN) de ladite jante (C), dans lequel lesdites surfaces de contact non rotatives (34, 44) sont sensiblement courbes avec la concavité de celles-ci orientée vers ledit axe de rotation (A), et dans lequel ladite poussée comprend les opérations suivantes:
- presser lesdits outils de décollement de talon (32, 42) sur une surface desdits flancs opposés (F1, F2) qui correspond à un secteur circulaire de la circonférence de ladite roue (R) afin d'enlever ledit pneu (PN) en correspondance avec ledit secteur circulaire;
- déplacer lesdits outils de décollement de talon (32, 42) à l'écart desdits flancs opposés (F1, F2);
- mettre ladite broche (14) et ladite roue (R) en rotation autour dudit axe de rotation (A) afin de déplacer ledit secteur circulaire par rapport auxdits outils de décollement de talon (32, 42) écartés; et
- répéter lesdites opérations de pressage, écartement et mise en rotation sur différents secteurs circulaires afin d'enlever le pneu complet (PN)t, dans lequel, lors de ladite répétition, les différents secteurs circulaires sont adjacents et couvrent ensemble la totalité de la circonférence desdits flancs opposés (F1, F2), et la position et/ou le déplacement desdits outils de décollement de talon (32, 42) peu(ven)t être stocké(s) dans une mémoire électronique.
